Europäisches Patentamt

European Patent Office

Office européen des brevets

(19)

(11) **EP 0 736 957 A1**

(12) **EUROPEAN PATENT APPLICATION**

(43) Date of publication:
09.10.1996 Bulletin 1996/41

(51) Int. Cl.$^6$: **H02M 1/12**

(21) Application number: 95830132.7

(22) Date of filing: 03.04.1995

(84) Designated Contracting States:
DE FR GB IT

(71) Applicant: SGS-THOMSON
MICROELECTRONICS S.r.l.
I-20041 Agrate Brianza (Milano) (IT)

(72) Inventors:
• Messi, Alessandro
I-20052 (IT)

• Grilli, Fabio
I-20052 Monza (IT)
• Cestari, Guiseppe
I-20132 Milano (IT)

(74) Representative: Pellegri, Alberto et al
c/o Società Italiana Brevetti S.p.A.
Via Puccini, 7
21100 Varese (IT)

(54) **Reduction of harmonic content of the current absorbed from the mains by a switching power supply**

(57)    The harmonic content of the current absorbed from mains by a switching mode power supply including a full-wave rectifier bridge and a storage capacitor for drawing power from the mains to be delivered to a DC-DC converter stage, is markedly depressed by connecting a resistance in the charge path of the storage capacitor from the output node of the rectifier bridge. With a relatively small power dissipation that may account from 2 to 8% of the instantaneous input power, an apparatus may be made to comply with the applicable specifications with a minimum cost without requiring the realization of a dedicated power-factor improving pre-regulation stage.

FIG. 1

## Description

The present invention relates to a switching mode power supply (SMPS) having a means for reducing harmonic content of the current drawn from the power distribution network (mains) in order to lower it below the limit set by present regulations or by more stringent regulations scheduled to enter in force in future. The circuit of the invention is extremely simple and inexpensive though ensuring compliance with the set limits.

Commonly, switching mode power supplies (SMPS) employ a fullwave rectifier bridge with a simple capacitor fitter to draw DC power from the main AC line. The capacitor, usually of large size, absorbs current, that is charges during peaks of the rectified mains' voltage. Therefore the current absorbed from the mains consists of pulses of large amplitude. Such a wave form of the current absorbed from the mains contains harmonics of the mains' frequency and the power factor, that is the ratio between real and apparent (reactive) power is rather low, in the vicinity of about 0.5-0.6.

The problem, in its more general aspects, pertains to the existence of two contrasting requirements. It is evident that by employing a filter capacitor of a relatively low value, the current absorbed from the mains would tend to track the waveform of the rectified mains' voltage thus ensuring a relatively low harmonic content and a high power factor. However in this case, the ripple on the current delivered by such an input stage of the switching mode power supply would be excessively pronounced.

By contrast, by employing a relatively large filter capacitor, the ripple may be strongly depressed but current absorption from the mains would tend to occur in the form of short peaks of large amplitude when the rectified voltage is in the vicinity of its maximum value (that is when it becomes higher than the output voltage).

A program for adopting at a national and international level increasingly restrictive rules has been active for many years. For example the European specification EN61000-3-2 which is going to substitute the existing specifications pertaining to the so-called consumer apparatuses, having a power absorption greater than 75W, homologated on or after, 1/1/97 which will be reclassified in class-A. The limit of applicability of these specifications will be further lowered to 50W apparatuses, starting from the year 2001.

In particular, according to the rule EN61000-3-2, consumer apparatuses will have to comply with the limits of class-D, and they will be regrouped in class-A only if the current absorbed from the mains satisfies certain requirements, defined by a mask, called "Special Wave Shape" (SWS). If the waveform of the current absorbed from the mains falls inside such an SWS, the specifications of class-D, which fix the limit of harmonic content proportionally to the input power level will be applicable, while the limits of class-A will be applied only if the envelope of the current crosses the profile of the SWS.

In the latter instance it is somewhat easier to comply with the harmonic content limits because they are fixed in absolute terms and coincide with the maximum limits of the class-D, as shown in the following tables.

TABLE 1

| LIMITS FOR CLASS-A | |
| --- | --- |
| Harmonic order n | Maximum permissible harmonic current A |
| Odd harmonics | |
| 3 | 2.30 |
| 5 | 1.14 |
| 7 | 0.77 |
| 9 | 0.40 |
| 11 | 0.33 |
| 13 | 0.21 |
| $15 \leq n \leq 39$ | $0.15 \frac{15}{n}$ |
| Even harmonics | |
| 2 | 1.08 |
| 4 | 0.43 |
| 6 | 0.30 |
| $8 \leq n \leq 40$ | $0.23 \frac{8}{n}$ |

TABLE 2

| LIMITS FOR CLASS-D | | |
|---|---|---|
| Harmonic order | mA/W | Maximum permissible harmonic current A |
| 3 | 3.4 | 2.30 |
| 5 | 1.9 | 1.14 |
| 7 | 1.0 | 0.77 |
| 9 | 0.5 | 0.40 |
| 11 | 0.35 | 0.33 |
| 13 and on | linear extrapolation 3.85/n | see Table 1 |

It is intuitive the increased interest toward cost effective circuital solutions for reducing the harmonic content.

A highly indicative parameter of harmonic content of the current absorbed from the mains is the so-called power factor (P.F.). In fact, the more the waveform of the current absorbed from the main tracks the waveform of the rectified voltage, the more the power factor (P.F.) approximates the theoretical maximum of 1, corresponding to a practically null harmonic content.

Known solutions generally rest on the use of a pre-regulation converter stage. To this purpose, two distinct converters connected in cascade are often used.

The use of a boost converter as a pre-regulation stage is typical because a boost converter has an intrinsically high power factor. The pre-regulation boost converter may then be followed for example by a common "flyback" converter.

On the other hand, a boost converter is unable of limiting overcurrents without requiring a dedicated circuitry for this purpose. Moreover, a boost converter may control and limit the current only as long as the output voltage remains higher than the maximum input voltage. In case of a mains' voltage of 220V, the output voltage may be of about 400V and therefore special circuit architectures capable of withstanding such a high voltage must be used.

Beside the mentioned boost converter, there are numerous other ways of realizing a pre-regulation stage. In practice all known solutions require the use of a power switch and of a relative control circuit.

The article entitled: "Single Converter High Power Factor SMPS" by M. Megejd, published by RCA in March 1992, contains a description of several known solutions to the problem of ensuring a high power factor, based on the use of a single converter SMPS circuit provided with a preregulation stage, which may be intended here incorporated.

All these known solutions have, in a varying measure, the disadvantage of being relatively burdensome in terms of costs. This is primarily due to the need of employing a second (additional) power switching device and a dedicated control circuit of such a preregulation power switch. Moreover, this control circuit is in the majority of cases in the form of a multipurpose integrated circuit, which is necessarily designed for a plurality of other types of application (typically a so-called multipurpose controller), and therefore is relatively complex and costly. Examples of commercially used devices are the controllers: L4981 and L6560 manufactured by SGS-Thomson Microelectronics. Usually these controllers include a driving local oscillator and at least a pulse width modulation control loop (PWM).

There are numerous applications wherein this type of solution rightly appears and is excessively costly compared with the result that should be obtained. For example, obtaining a power factor in the vicinity of 0.99 or in any case well above 0.9 is not always necessary in order to fully meet the requirements of the rules that establish the maximum harmonic content level, especially in case of consumer apparatuses of relatively low or medium price.

There exist therefore the need and/or utility of a circuit device capable of lowering the harmonic content of the current absorbed from the mains and ensuring a decisive reduction so as to satisfy the limits established by the applicable rules and which would be simpler and more economic to implement as compared with the known devices.

A further object of the present invention is that of providing a device for increasing the power factor of a switching mode power supply, the effectiveness of which is automatically enhanced with the increasing of the power absorbed from the mains by the supplied apparatus.

These objectives and other advantages are obtained with the circuit device object of the present invention, which does not require the use of any additional power-switching stage neither of the relative control circuitry, though ensuring a reduction of harmonic content of the current absorbed from the mains and making the harmonic content safely below a certain limit set by the present rules or those scheduled to enter into force in the future.

Has now been found that by connecting a resistance in a charge path of an output filter capacitor, that is in the current path from the output node of the input rectifier bridge to the filter capacitor, a marked reduction of the harmonic content is obtained, proportionally to the value of the added resistance.

The increased time-constant of the charging process of the filter capacitor by a succession of current pulses automatically determines a reduced amplitude and a longer duration of the charging current pulses that occur when the mains' rectified voltage is in the vicinity of its peak value. This brings about a surprisingly large reduction of the harmonic content of the current absorbed from the mains and even a remarkable increase of the power factor.

A particularly advantageous aspect is represented by the fact that upon increasing the instantaneous value of the absorbed power, because the DC voltage on the filter capacitor tends to drop to a lower value, the time of conduction of a direct output current delivering diode increases. This occurs because the intervals of time during which the rectified mains' voltage is greater than the output voltage (that is than the charge voltage of the filter capacitor increase). Thus the current absorbed from the main assumes a wave form even more similar to a sinusoid instead of to a series of pulses. This in turns determines a corresponding increase of the power factor.

The different aspects and advantages of the invention will become more evident through the following description of an important embodiment and by referring to the annexed drawings wherein:

**Figure 1** is a partial electric scheme of a switching mode power supply incorporating the arrangement of the invention for reducing the harmonic content of the current absorbed from the mains;
**Figures 2, 3, ,4, 5** and **6** show, in the form of diagrams, the functioning characteristics of the circuit of the invention.

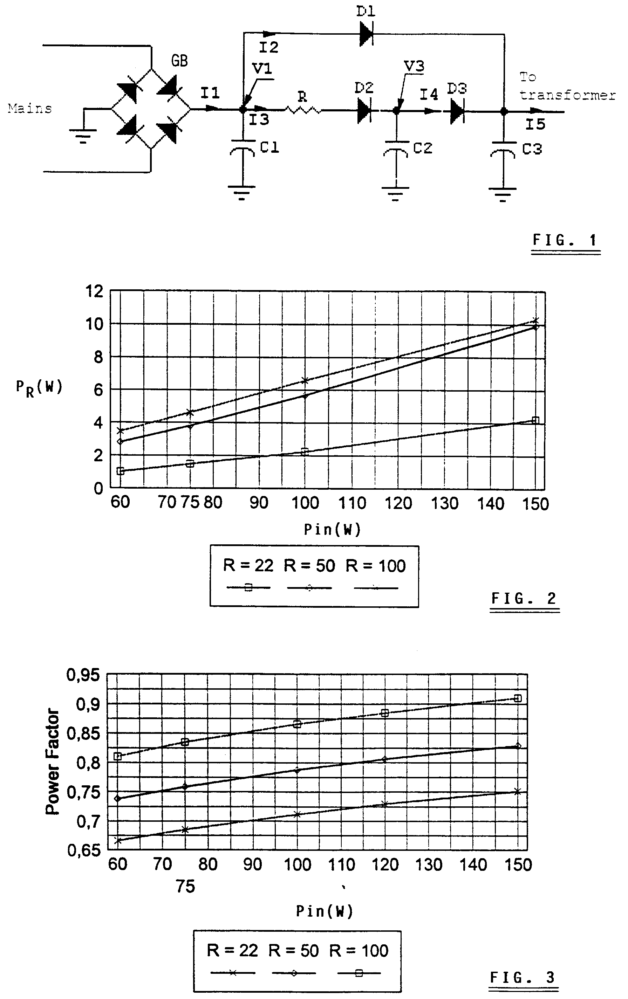

An electric scheme of a fullwave Graetz bridge rectifier, commonly employed in AC/DC converters for absorbing DC power from AC mains is shown in Fig. 1.

Basically, the circuit comprises a Graetz diode bridge connected to the mains and a filter or output charge storage capacitor C2, which is normally an electrolytic capacitor of a relatively large capacitance.

According to the present invention, a resistance R is connected in series along the charge current path of the capacitor C2 directly from the output node of the bridge rectifier.

In the circuit of the invention, the capacitor C2 is directly charged by drawing energy from the mains at the rectified voltage present on the output node of the Graetz bridge. The diodes D2 and D3 by preventing inversion of the current direction ensure this mode of operation.

The output storage (filter) capacitor C2 is charged in correspondence of peaks of the rectified mains' voltage, that is when V1 becomes greater than V3.

In practice, the energy stored in the capacitor C2 provides the output current component I4 which sums itself with the current I2 that is output through the diode D1.

Therefore, it is the energy stored in the capacitor C2 that provides the required output power during the greater part of each semiperiod of the mains' frequency when the instantaneous value of the rectified main voltage is lower than the output DC voltage V3.

According to the invention, in correspondence of peaks of the rectified mains' voltage, the output storage capacitor C2 will no longer be charged through a relatively fast process but will charge with a time constant given by RxC2. This produces a depression of the peak value of the current I3 and a corresponding increase of the duration of the charge current pulse.

It has now been found that with a modest power dissipation on the resistance R, which may be contained between about 2% and 7.5-8% of the input power, a remarkable reduction on the harmonic content of the current absorbed from the mains is obtained, that is a remarkable attenuation of the harmonics of the mains' frequency. Moreover, in many recurrent conditions of operation, the above result is accompanied by a corresponding increase of the power factor which may rise up and above 0.9 in case of a relatively high instantaneous input power.

The increase of the power factor is proportional to the increase of the instantaneous value of the power absorbed from the mains and this makes the device of the invention particularly effective because its effectiveness tends to increase with an increase of the input power level, in other words when the operating conditions of the apparatus connected to the mains becomes more critical.

In certain applications, the broader (layer duration) of the current peaks that is determined by the introduction of the resistance R, may be sufficient to make the envelope of the waveform of the current absorbed from the mains cross the SWS profile and therefore determine an advantageous re-entry of the apparatus in the class-A (consumer).

By properly sizing the resistance R, is possible to make the harmonic content of the current absorbed from the mains by the apparatus meet the specifications of the class-D, for a broad spectrum of instantaneous values of the power absorbed from the mains.

The capacitor C1 has the function of a low-pass filter on the input for spurious high frequency spikes that may be present on the mains.

The capacitor C3 helps in curbing eventual high frequency noise deriving from the switching of the power device of the SMPS.

It is evident how the device of the invention lends itself to a quite simple retrofit intervention on existing apparatuses, thus permitting to meet the requirements of the announced new rules without any major cost.

### *EXAMPLE*

With reference to the electric scheme of Fig. 1 and to the values of the components indicated therein, a number of tests have been performed to establish the effectiveness of the device of the invention. The results of these tests are reported in a series of diagrams in Figures 2-6.

For different values of resistance, the ratio between the power dissipated on the compensation resistance in function of the instantaneous value of the input power Pin (power absorbed from the mains) is shown in Fig. 2.

As may be observed, with the indicated values of resistance, the power dissipated on the compensation resistance remains a relatively small fraction of the power absorbed from the mains.

The improvement of the power factor obtained for a certain range of the level of the input power and for different values of resistance, is shown in Fig. 3.

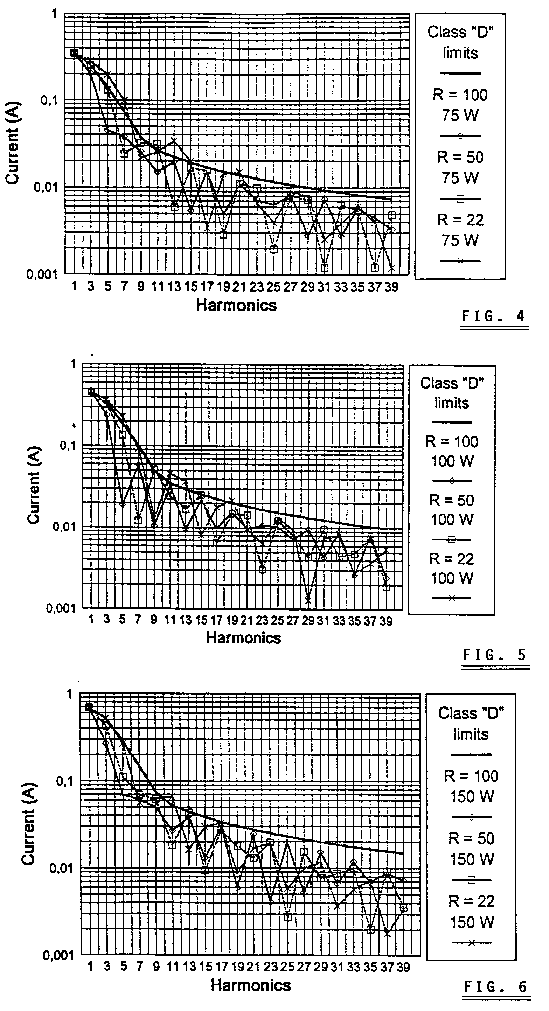

Figures 4, 5 and 6, show the respective harmonic contents of the current absorbed from the mains at three different levels of input power, respectively at 75W, 100W and 150W. The indicated parameters (value of the resistance R and of the input power absorbed from the mains) that meet the requirements of class-D, according to the above reported tables, are shown in a label placed on the right side of the relative diagram.

## Claims

1. A switching mode power supply having at least a power absorption stage from the mains comprising a bridge rectifier, a storage capacitor, at least a charge path of said capacitor from an output node of said bridge rectifier, at least a first current delivery path of a first output current component comprising a diode connected between the output node of the bridge rectifier and a current output node of the stage, at least a second current delivering path of a second output current component from said storage capacitor comprising a diode for blocking a reverse current, characterized by further comprising

   a resistance connected in series in said charge current path of said storage capacitor having a value sufficient to produce a reduction of the harmonic content of the current absorbed from the mains below a preset limit.

2. A switching mode power supply as defined in claim 1, characterized by the fact that the output current is delivered to a cascaded DC-DC converter, the power switch of which is controlled by a control circuit comprising a driving oscillator and a pulse width modulation loop.

3. A switching mode power supply as defined in claim 1, wherein said resistance is capable of dissipating at least 8% of the maximum input power handled by the power supply.

4. A method for reducing the harmonic content of the current absorbed from the mains by a switching mode power supply, characterized by comprising

   connecting a resistance in the charge path of a storage capacitor from the output node of a bridge rectifier functionally connected to the mains.

FIG. 1

R = 22  R = 50  R = 100

FIG. 2

R = 22  R = 50  R = 100

FIG. 3

FIG. 4

FIG. 5

FIG. 6

**European Patent Office**

## EUROPEAN SEARCH REPORT

Application Number

EP 95 83 0132

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN<br>vol. 018 no. 570 (E-1623) ,31 October 1994<br>& JP-A-06 209574 (SONY CORP) 26 July 1994,<br>* abstract * | 1,3,4 | H02M1/12 |
| Y | | 2 | |
| X | PATENT ABSTRACTS OF JAPAN<br>vol. 009 no. 053 (E-301) ,7 March 1985<br>& JP-A-59 191476 (HITACHI SHIYOUMEI KK)<br>30 October 1984,<br>* abstract * | 1,3,4 | |
| Y | US-A-4 677 366 (WILKINSON BRUCE L ET AL)<br>30 June 1987<br>* abstract; figure 1 * | 2 | |

TECHNICAL FIELDS
SEARCHED      (Int.Cl.6)

H02M

The present search report has been drawn up for all claims

| Place of search | Date of completion of the search | Examiner |
|---|---|---|
| THE HAGUE | 21 August 1995 | Van den Doel, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)